# EUROPEAN PATENT APPLICATION

(11) **EP 2 105 847 A1**
(43) Date of publication of application: **30.09.2009**
(21) Application number: 08300157.8
(22) Date of filing: 27.03.2008
(51) Int. Cl.: G06F 17/30, G06F 17/27

(54) **Device and method for automatically generating ontologies from term definitions contained into a dictionary**

(71) Applicant: Alcatel Lucent, 75008 Paris (FR)
(72) Inventor: Larvet, Philippe, 91470, FORGES LES BAINS (FR); Carrez, François, 94320, THIAIS (FR)
(74) Representative: Nicolle, Olivier

(57) **Abstract**

A device (D), intended for automatically generating ontologies, comprises an analysis means (AM) arranged, each time that is received a term for which an ontology must be generated, i) for accessing a dictionary (DC) to determine a definition of this received term, then ii) for extracting pertinent terms from this determined definition, then iii) for accessing the dictionary (DC) to determine the definition of each of the extracted pertinent terms, then iv) for building, for each of the determined definitions of the received term and extracted pertinent terms, at least one logical clause expressing a relationship between pairs of pertinent terms it contains, these built logical clauses defining the ontology of the received term.

## Description

The present invention relates to the analysis of documents, and more precisely to a method and a device for automatically generating ontologies used within the context of document analysis or processing.

The term "automatically generating"" means here that ontologies, according to the present invention, are able to be automatically generated and completed from term definitions.

Moreover the term "ontology" depicts here a formal description (or data model) of the terms (or concepts) that are manipulated within a given domain and of the relationships between these terms (or concepts). Ontologies are notably used to reason about the objects that are present within a domain.

As it is known from the man skilled in the art, an increasing number of applications use ontologies in order to allow or to participate or else to facilitate the analysis or processing of documents. This is notably the case of devices that automatically build executable applications from specifications or of text analyzers that are used for automatically processing incoming e-mails in CRM ("Customer Relationship Management"), or of "semantic search engines" that are able to find pertinent information from natural language requests.

So, it is important to have at one's disposal ontologies that fully and precisely describe terms (or concepts) that may be contained into texts liable to be analyzed or processed.

Nowadays ontologies are manually built with the assistance of dedicated tools, such as "Protege" (which is notably described at the Internet address "http://protege.standford.edu"), for instance. This is not satisfying, because each time a text (or document) comprises a term (or concept) whose correspondence within an ontology does not yet exist, a part of this text can not be correctly analyzed or processed till a specialist manually build the corresponding entry in the ontology. Likewise, if synonyms (or hyponyms or antonyms...) of this term (or concept) are used in the text, the whole meaning of the text can be misunderstood, due to the lack of a pertinent definition of this term or relationships with other useful terms.

So, the object of this invention is to improve the situation by allowing an automatic generation of ontologies.

For this purpose, it provides a method for generating automatically ontologies, consisting, each time one receives a term for which an ontology must be generated:
- of determining the definition of this received term into a dictionary, then
- of extracting pertinent terms from this determined definition, then
- of determining the definition of each of these extracted pertinent terms into the dictionary, then
- of building, for each of the determined definitions of the received term and extracted pertinent terms, at least one logical clause expressing a relationship between pairs of pertinent terms it contains, these built logical clauses defining the ontology of the received term.

The method according to the invention may include additional characteristics considered separately or combined, and notably:
- after having built the logical clauses, one may convert them into a chosen ontology language;
   ➢ one may convert the logical clauses by means of a conversion table;
   ➢ the ontology language may be chosen from a language group comprising at least OWL ("Ontology Web Language") and RDF ("Resource Description Framework").

The invention also provides a device for generating automatically ontologies and comprising an analysis means arranged, each time that is received a term for which an ontology must be generated:
- for accessing a dictionary to determine a definition of this received term, then
- for extracting pertinent terms from this determined definition, then
- for accessing the dictionary to determine the definition of each of the extracted pertinent terms, then
- for building, for each of the determined definitions of the received term and extracted pertinent terms, at least one logical clause expressing a relationship between pairs of pertinent terms it contains, these built logical clauses defining the ontology of the received term.

The device according to the invention may include additional characteristics considered separately or combined, and notably :
- it may further comprise a converting means arranged for converting the built logical clauses into a chosen ontology language;
   ➢ the converting means may be arranged for converting the logical clauses by means of a conversion table;
      - it may further comprise a storing means arranged for storing the conversion table;
   ➢ the ontology language may be chosen from a language group comprising at least OWL and RDF.

The invention also provides a computer software product comprising a device such as the one above introduced.

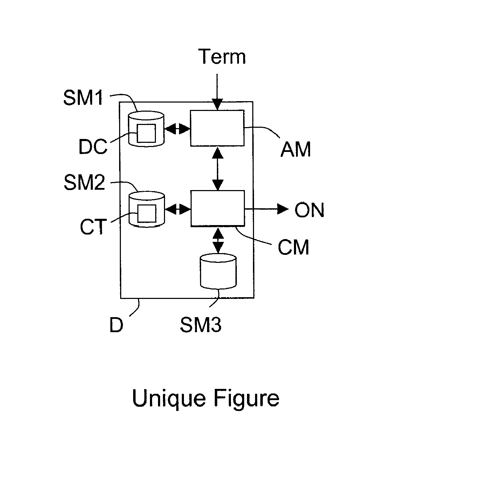

Other features and advantages of the invention will become apparent on examining the detailed specifications hereafter and the appended drawing, wherein the unique figure schematically illustrates an example of embodiment of a device according to the invention.

The appended drawing may serve not only to complete the invention, but also to contribute to its definition, if need be.

The invention aims at offering a device (D), and the associated method, intended for automatically generating ontologies from term definitions that are contained into dictionaries.

The invention addresses any ontology that describes in a formal manner terms (or concepts) that are manipulated in any type of domain and the relationships between these terms (or concepts).

It is important to note that a device D according to the invention may be part of, or coupled to, an equipment or an application that is, for instance, intended for analyzing or processing texts or documents. So, such a device D can be a computer electronic product that is made of software modules or electronic circuit(s) (or hardware modules) or else a combination of hardware and software modules.

As schematically illustrated in the unique figure, a device D according to the invention comprises at least an analysis module AM.

The analysis module AM is arranged for intervening each time its device D receives a term (or concept) for which an ontology has to be generated. So, when a term is received, the analysis module AM accesses at least one dictionary DC to determine a definition of this received term. As illustrated the dictionary DC may be stored into a first storing means SM1 of the device D. But this is not mandatory. Indeed, the dictionary DC could be also stored into an external storing means accessible to the device D, for instance onto a distant server through a communication network.

Any type of first storing means SM1, capable of storing at least one dictionary DC and known from the man skilled in the art, may be used. So, it can be a database, a flash memory, a ROM, a RAM, a CD ("Compact Disc") or DVD ("Digital Video Disc"), a flat files system, or any other kind of repository.

For instance, if the analysis module AM has to build an ontology describing the "semantics" of the concept of "translation", then it determines the definition of the concept "translation" into the dictionary DC (here stored into the first storing means SM1). This definition can be "The act of converting a text from one language to another".

Then the analysis module AM extracts the pertinent terms that are contained into the term (or concept) definition it has determined. For this purpose it may perform a semantic analysis of the definition. A "pertinent term within a phrase" is a word or a set of words (or "lexical string") that is/are the "semantic skeleton" of the phrase, i.e. mainly nouns and verbs. For instance, in the sentence "The act of converting a text from one language to another" pertinent terms are "act of converting" (i.e. "conversion" or "convert"), "text" and "language".

So, for the concept "translation", the pertinent terms of its definition are "convert", "text" and "language".

When the analysis module AM has extracted the pertinent terms contained into a definition, its accesses again the dictionary DC to determine the definition of each of these extracted pertinent terms. For instance, in the case of the concept "translation":
- the definition of the extracted pertinent term "convert" is "to transform or change something into another form, substance, state, or product",
- the definition of the extracted pertinent term "text" is "a written passage consisting of multiple characters, symbols or sentences", and
- the definition of the extracted pertinent term "language" is "a system of communication using the spoken words or using symbols that represent words or sounds".

When the analysis module AM has determined the definition of each pertinent term extracted from the definition of the received term (or concept), it builds, for each of the determined definitions of the received term (or concept) and extracted pertinent terms, at least one logical clause which expresses a relationship between pairs of pertinent terms it contains. The set of the built logical clauses defines the ontology of the received term (or concept). The term "clause" must be here understood in the sense of the Bourbaki's theory of sets.

For instance, in the case of the concept "translation":
- the definition of "translation" gives the following logical clauses:
   ➢ "translation is an act of converting",
   ➢ "the conversion concerns a text", and
   ➢ "the text is converted from one language to another language",
- the definition of "text" gives the following logical clauses:
   ➢ "a text is a written passage",
   ➢ "the passage consists of several characters", or
   ➢ "the passage consists of several symbols", or
   ➢ "the passage consists of several sentences,
   ➢ "a sentence is a set of words", and
   ➢ "a sentence has a grammatical structure".

It is important to note that the analysis module AM may be divided into two sub-modules, a first one for accessing the dictionary DC to determine a definition, and a second one for extracting the pertinent terms that are contained into a definition determined by the first sub-module.

As illustrated in the non limiting example of the unique figure, the device D according to the invention may also comprise a conversion module CM. This conversion module CM is intended for converting the logical clauses (built by the analysis module AM) into a chosen ontology language, such as OWL ("Ontology Web Language") or RDF ("Resource Description Framework"), for instance.

Let us remind that OWL and RDF are two ontology languages that have been developed and standardized by the W3C ("World Wide Web Consortium").

To carry out a conversion of a set of logical clauses the conversion module CM may use a conversion table CT. As illustrated, such a conversion table CT may be stored into a second storing means SM2 of the device D. But this is not mandatory. Indeed, the conversion table CT could be also stored into an external storing means accessible to the device D, for instance onto a distant server through a communication network.

Any type of second storing means SM2, capable of storing at least one conversion table CT and known from the man skilled in the art, may be used. So, it can be a database, a flash memory, a ROM, a RAM, a CD or DVD, a flat files system, or any other kind of repository.

It is important to note that the first SM1 and second SM2 storing means could be two parts of the same storing means.

The conversion module CM comprises an output on which it may deliver the set of logical clauses it has converted and which defines the ontology ON corresponding to the term (or concept) previously received by its device D.

As illustrated in the non limiting example of the unique figure, the device D according to the invention may also comprise a third storing means SM3 in which the conversion module CM may store the set of logical clauses it has converted. Any type of third storing means SM3, capable of storing sets of (converted) logical clauses defining ontologies ON and known from the man skilled in the art, may be used. So, it can be a database, a flash memory, a ROM, a RAM, a flat files system, or any other kind of repository.

It is important to note that the first SM1 and/or second SM2 and/or third SM3 storing means could be two or three parts of the same storing means.

A non limiting example of a part of an OWL conversion table CT is given hereafter:

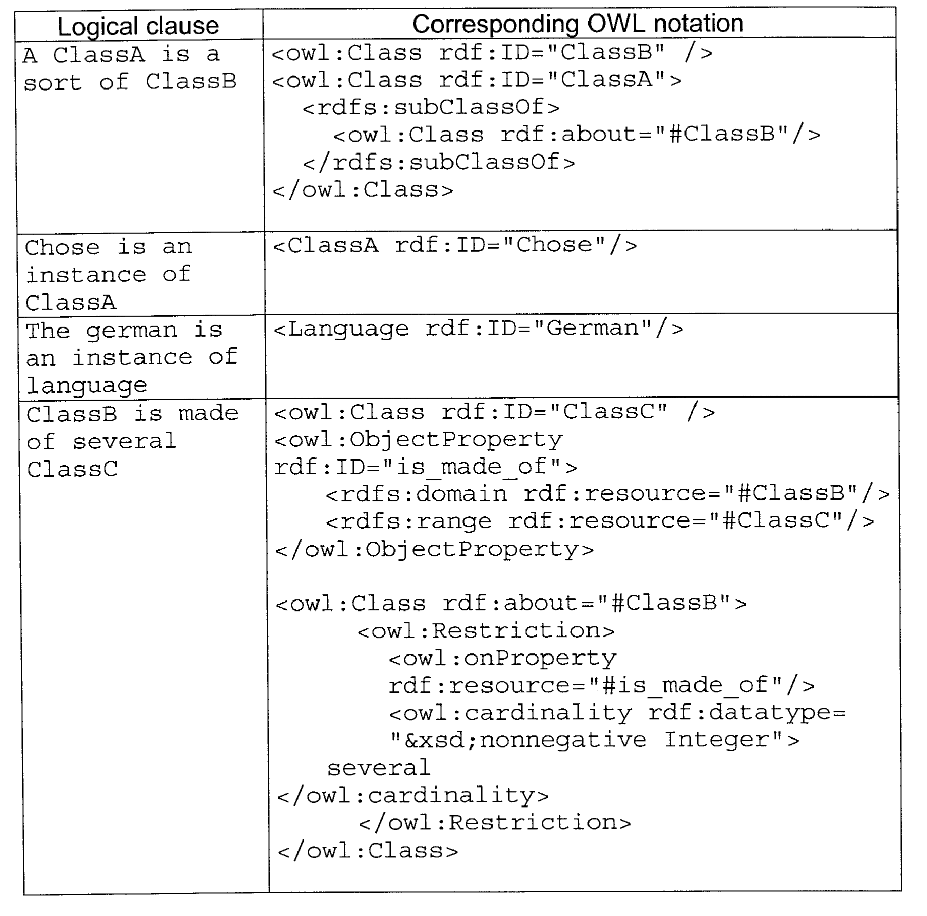

In this conversion table CT each logical clause is translated into its correspondence in OWL.

With such an example of conversion table CT, it is possible to generate the following example of XML file which contains an ontology ON describing the term "Translation" in OWL (i.e. with logical clauses converted in OWL) (the comments in italic inside "<!-- .. -->" show how the logical clauses are interpreted by the conversion module (or ontology generator) CM):

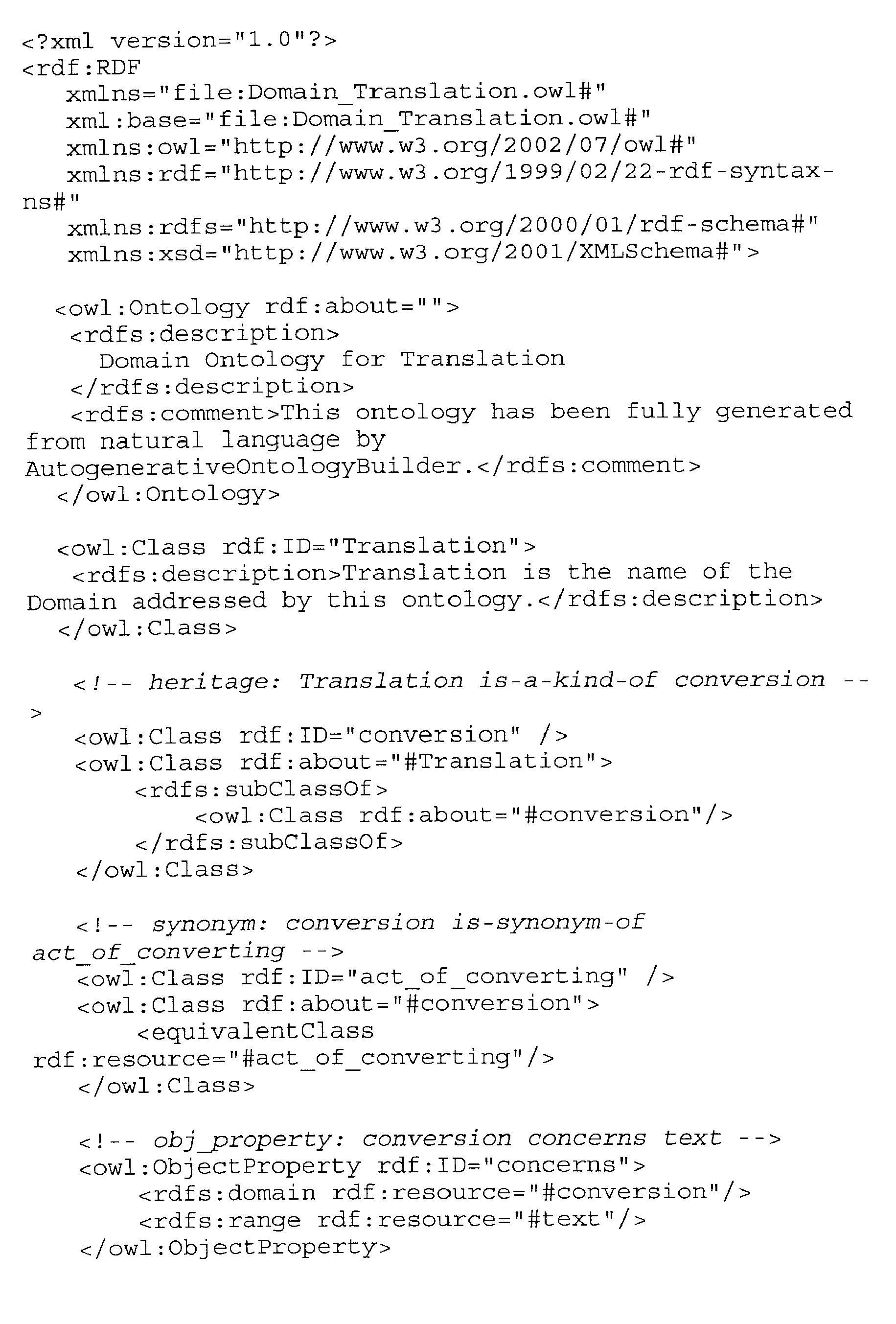

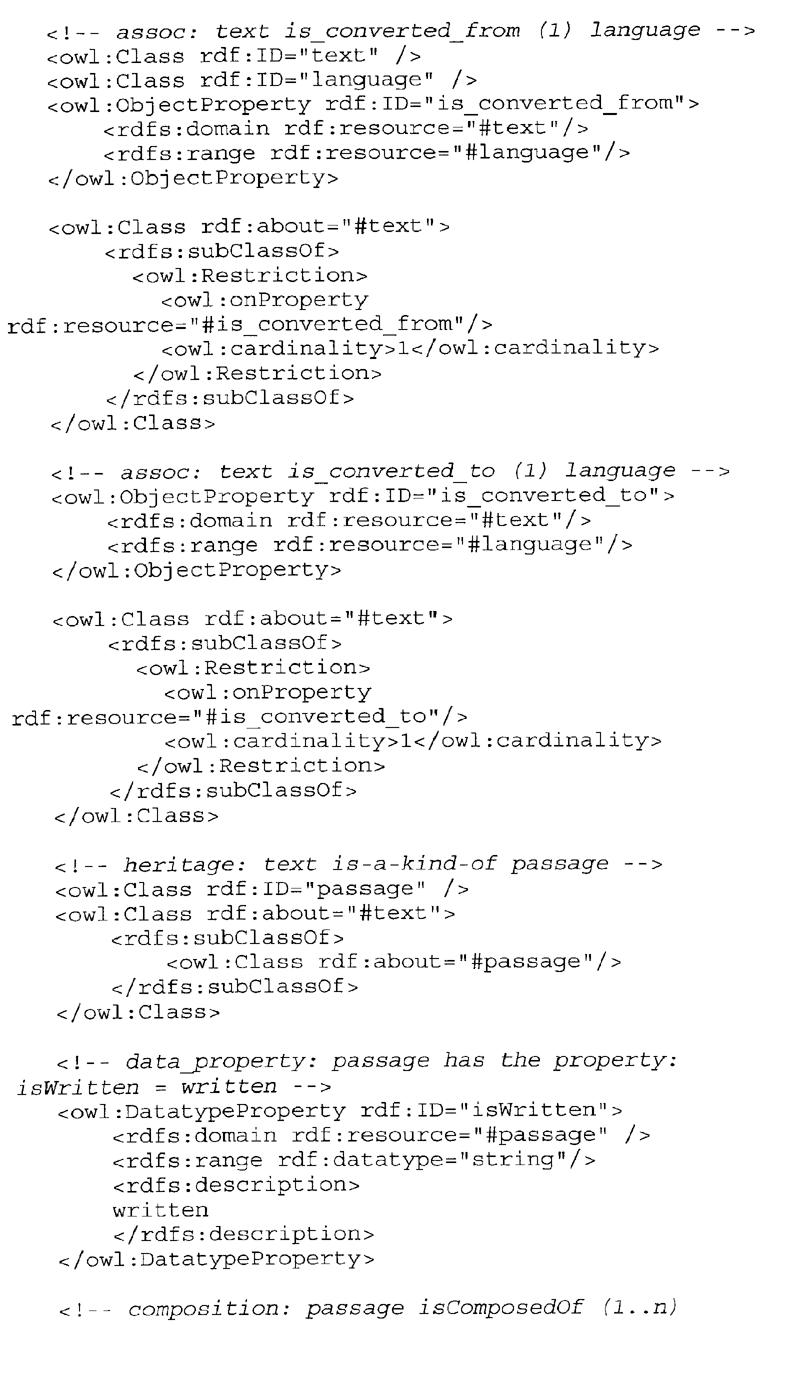

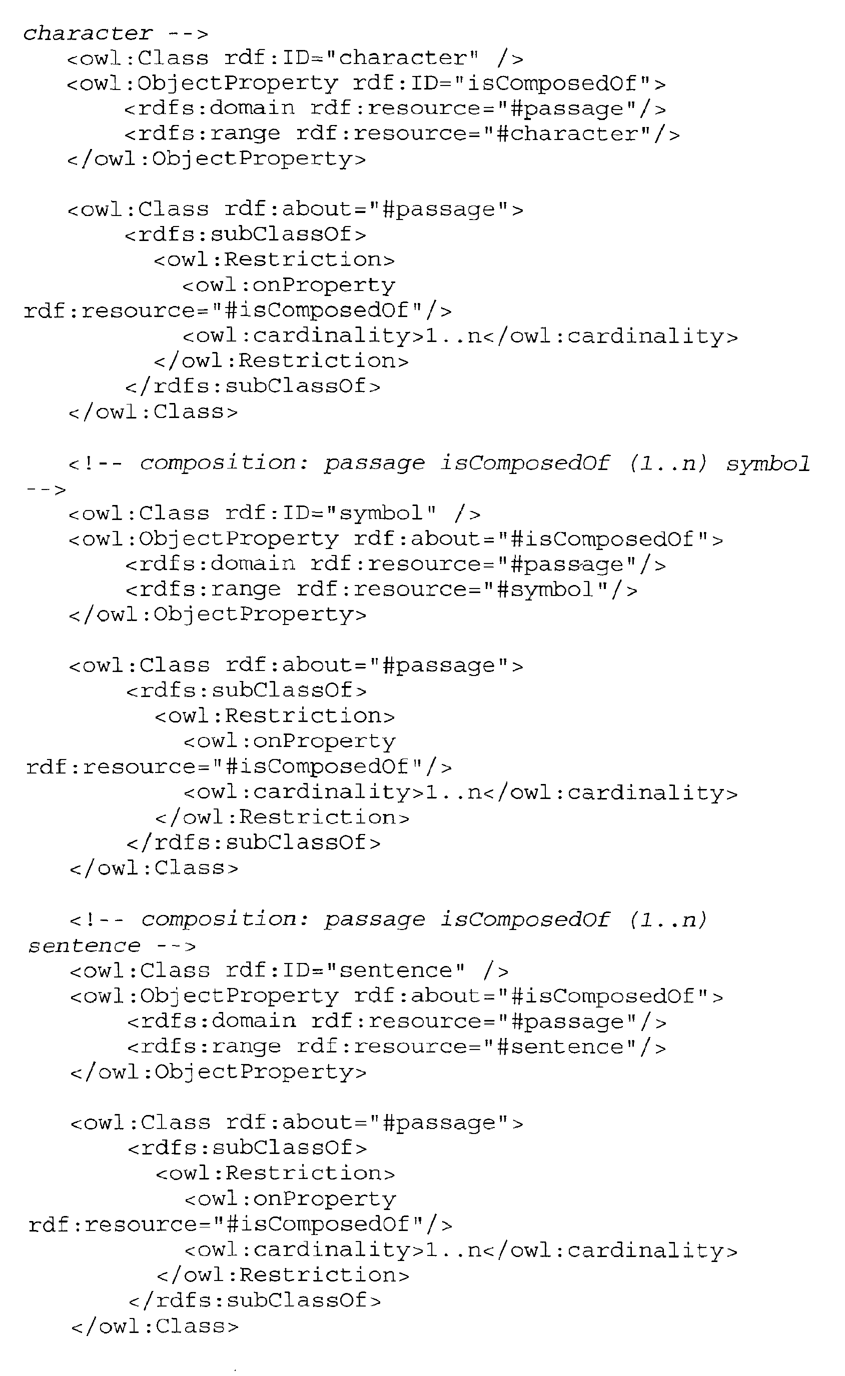

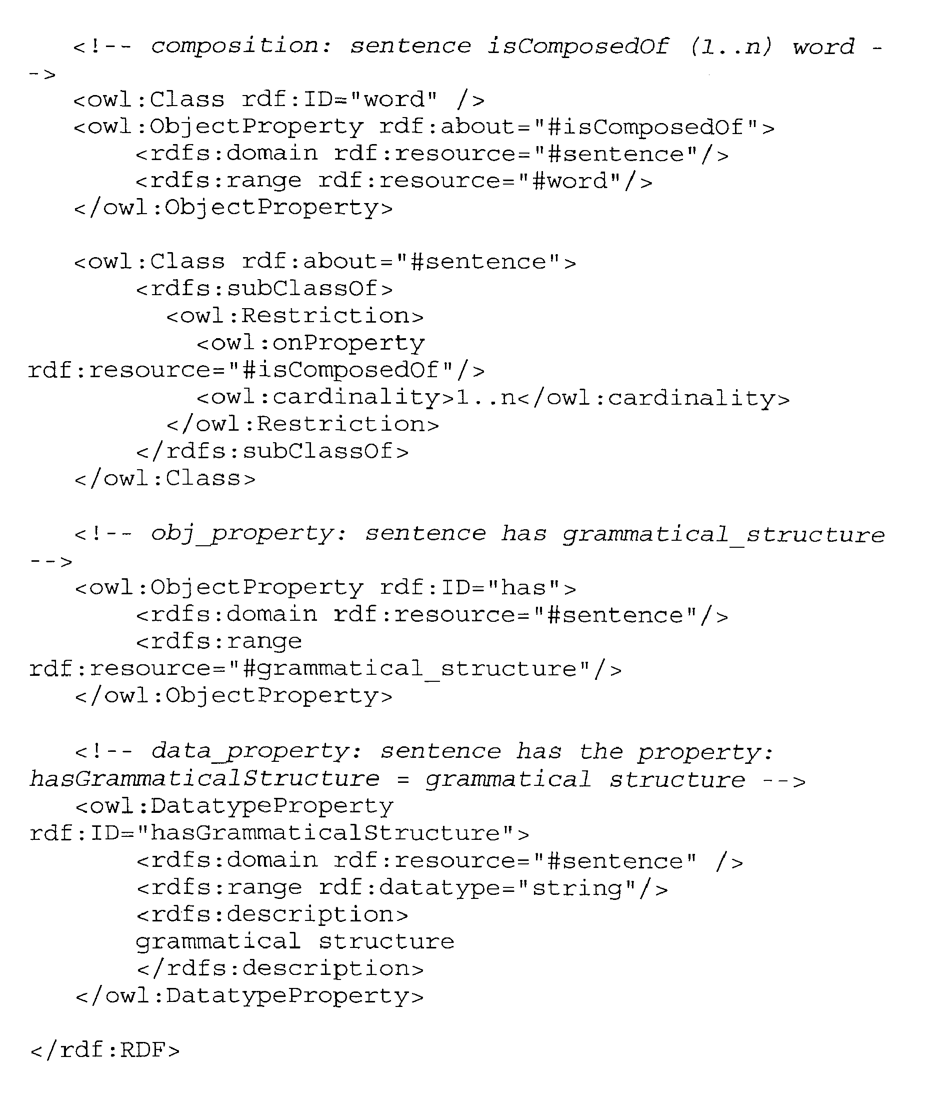

With the above mentioned example of ontology ON corresponding to the concept "translation", it is possible to make reasoning and to answer to questions such as "what is a translation?", "what is concerned by a translation?", "what is the role of a text in the translation?", "how languages are used in a translation ?".

The invention can also be considered in terms of a method for automatically generating ontologies.

Such a method may be implemented by means of a device D such as the one above described with reference to the unique figure. Therefore, only its main characteristics will be mentioned hereafter.

The method according to the invention consists, each time one receives a term for which an ontology must be generated:
- of determining the definition of this received term into a dictionary DC, then
- of extracting pertinent terms from this determined definition, then
- of determining the definition of each of these extracted pertinent terms into the dictionary DC, then
- of building, for each of the determined definitions of the received term and extracted pertinent terms, at least one logical clause expressing a relationship between pairs of pertinent terms it contains, these built logical clauses defining the ontology of the received term.

The invention allows to improve not only the performance of text processing or analysis because the processing time can be reduced, but also the performance of text processing or analysis because the deep of the "understanding" of the text is increased. For instance, in the case of a CRM application intended for processing customers e-mails with a grammatical or semantic approach, the capabilities of the text processor and grammatical analyzer are notably improved because i) different terms and concepts can be linked together, ii) the relationships between the terms can be established, and iii) the deep of the analysis and its pertinence can be enhanced. Moreover, the automatic building of ontologies allows the use of powerful tools in the domain of natural language requesting or processing.

The invention is not limited to the embodiments of method and device described above, only as examples, but it encompasses all alternative embodiments which may be considered by one skilled in the art within the scope of the claims hereafter.

## Claims

1. Method for automatically generating ontologies, **characterized in that** it consists, each time one receives a term for which an ontology has to be generated, i) of determining the definition of said received term into a dictionary (DC), then ii) of extracting pertinent terms from said determined definition, then iii) of determining the definition of each of said extracted pertinent terms into said dictionary (DC), then iv) of building, for each of said determined definitions of said received term and said extracted pertinent terms, at least one logical clause expressing a relationship between pairs of pertinent terms it contains, said built logical clauses defining the ontology of said received term.

2. Method according to claim 1, **characterized in that** after having built said logical clauses one converts them into a chosen ontology language.

3. Method according to claim 2, **characterized in that** one converts said logical clauses by means of a conversion table (CT).

4. Method according to one of claims 2 and 3, **characterized in that** said ontology language is chosen from a language group comprising at least OWL and RDF.

5. Device (D) for automatically generating ontologies, **characterized in that** it comprises an analysis means (AM) arranged, each time that is received a term for which an ontology has to be generated, i) for accessing a dictionary (DC) to determine a definition of said received term, then ii) for extracting pertinent terms from said determined definition, then iii) for accessing said dictionary (DC) to determine the definition of each of said extracted pertinent terms, then iv) for building, for each of said determined definitions of said received term and said extracted pertinent terms, at least one logical clause expressing a relationship between pairs of pertinent terms it contains, said built logical clauses defining the ontology of said received term.

6. Device according to claim 5, **characterized in that** it further comprises a converting means (CM) arranged for converting said built logical clauses into a chosen ontology language.

7. Device according to claim 6, **characterized in that** said converting means (CM) is arranged for converting said logical clauses by means of a conversion table (CT).

8. Device according to claim 7, **characterized in that** it further comprises a storing means (SM2) arranged for storing said conversion table (CT).

9. Device according to one of claims 6 to 8, **characterized in that** said ontology language is chosen from a language group comprising at least OWL and RDF.

10. Device according to one of claims 5 to 9, **characterized in that** it further comprises an other storing means (SM1) arranged for storing said dictionary (DC).

11. Computer software product, **characterized in that** it comprises a device (D) according to one of claims 5 to 10.
